# EUROPEAN PATENT APPLICATION

(11) **EP 2 680 355 A1**
(43) Date of publication of application: **01.01.2014**
(21) Application number: 12748950.8
(22) Date of filing: 18.01.2012
(51) Int. Cl.: H01M 8/04

(54) **FUEL CELL SYSTEM**

(30) Priority: 24.02.2011 JP 2011037836; 30.03.2011 JP 2011076141
(71) Applicant: Panasonic Corporation, Osaka 571-8501 (JP)
(72) Inventor: OE, Jun, Osaka 540-6207 (JP); FUJII, Hiroaki, Osaka 540-6207 (JP); KOKUBU, Hirofumi, Osaka 540-6207 (JP); KAN, Hiroaki, Osaka 540-6207 (JP)
(74) Representative: Grünecker, Kinkeldey, Stockmair & Schwanhäusser
(86) International application number: PCT/JP2012/000257
(87) International publication number: WO 2012/114646

(57) **Abstract**

The present invention is a fuel cell system (27) including: a hydrogen generator (2) configured to cause a reforming reaction of a material gas to generate a hydrogen-containing fuel gas; a fuel cell (5) configured to cause a reaction between the fuel gas generated by the hydrogen generator and an oxygen-containing oxidizing gas to generate electric power; a combustor (3) configured to combust at least one of the material gas and an off fuel gas discharged from the fuel cell; a casing (13) configured to accommodate the hydrogen generator, the fuel cell, and the combustor; a first exhaust port (14), which is formed on the casing and through which the flue gas from the combustor is discharged to an outside of the casing; a first intake port (21) formed on the casing; suction units (4, 7, 23, 32, and 51) configured to suction air through the first intake port into the casing; and a CO detector (24) configured to detect carbon monoxide contained in the air suctioned through the first intake port.

## Description

### Technical Field

The present invention relates to a fuel cell system, and particularly to a fuel cell system including a combustor.

### Background Art

In a fuel cell system, a material gas, such as a city gas, is reformed into a hydrogen-rich fuel gas by a catalytic reaction in a hydrogen generator. In order to heat the hydrogen generator up to a temperature at which the reforming reaction can be performed, and since the reforming reaction in the hydrogen generator is an endothermic reaction, a combustor configured to supply to the hydrogen generator a heat energy necessary to perform the reforming reaction is included in the fuel cell system. The combustor combusts the material gas and an off fuel gas (the fuel gas discharged from a fuel cell after the reaction and containing a combustible component) to supply heat to the hydrogen generator. At this time, the combustor obtains fresh air from the outside of the fuel cell system as combustion air to secure a stable combustion state. A flue gas generated by the combustion in the combustor is discharged as a flue gas through an exhaust port formed on a casing to the outside of the fuel cell system.

Normally, the flue gas contains almost no carbon monoxide (hereinafter referred to as "CO"). However, if the amount of oxygen supplied to the combustor becomes insufficient, the flue gas contains the CO. For example, in a case where the entire fuel cell system is covered with and sealed by a cover member (such as a motorcycle cover), the combustor cannot take in the fresh air. With this, incomplete combustion occurs in the combustor, and the flue gas gradually contains the CO, so that the CO concentration in the cover member increases. Thus, the concentration of oxygen taken into the combustor decreases, and the incomplete combustion is further accelerated, so that the concentration of the CO discharged through the exhaust port further increases. By the high-concentration CO, failures, such as the decrease in the amount of electric power generated in the fuel cell system, the stop of the system, and the breakdown of the system, occur.

Therefore, to detect whether or not the combustion state in the combustor is good, a CO sensor configured to detect the concentration of carbon monoxide generated at the time of a combustion failure may be disposed on a flue gas passage.

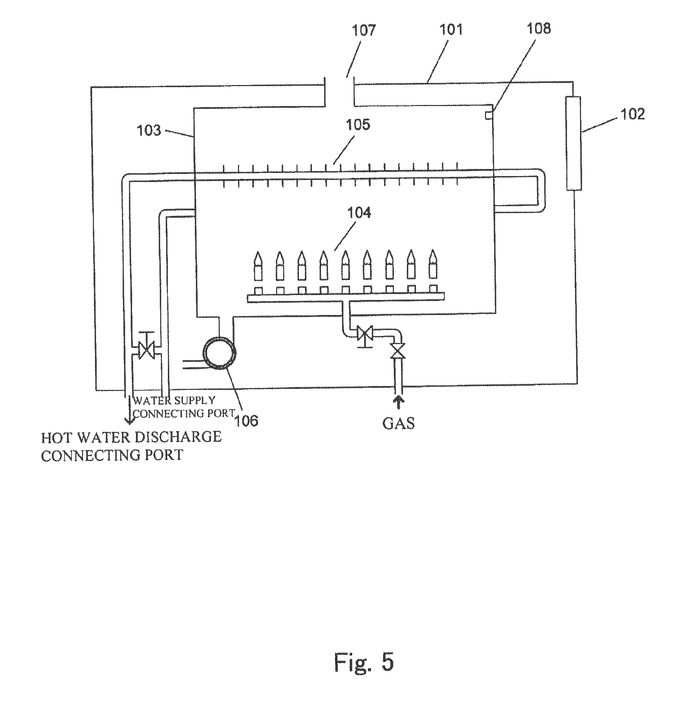

For example, as shown in Fig.5, there is a water heater in which a CO sensor is provided on an exhaust port side of a combustion chamber. In the water heater, when a combustion fan 106 rotates, air in a room is taken into a casing 101 through an intake port 102 formed on a side surface of the casing 101. The air taken into the casing 101 is supplied to a combustion chamber 103. In addition, a gas is supplied to a burner 104 of the combustion chamber 13. The gas and the air are combusted by the burner 104, and the flue gas is discharged through an exhaust port 107 formed on an upper portion of the combustion chamber 103. A contact burning-type CO sensor 108 is provided on the exhaust port 107 side of the combustion chamber 103 and detects the concentration of the CO contained in the flue gas (Conventional Example 1; see PTL 1, for example).

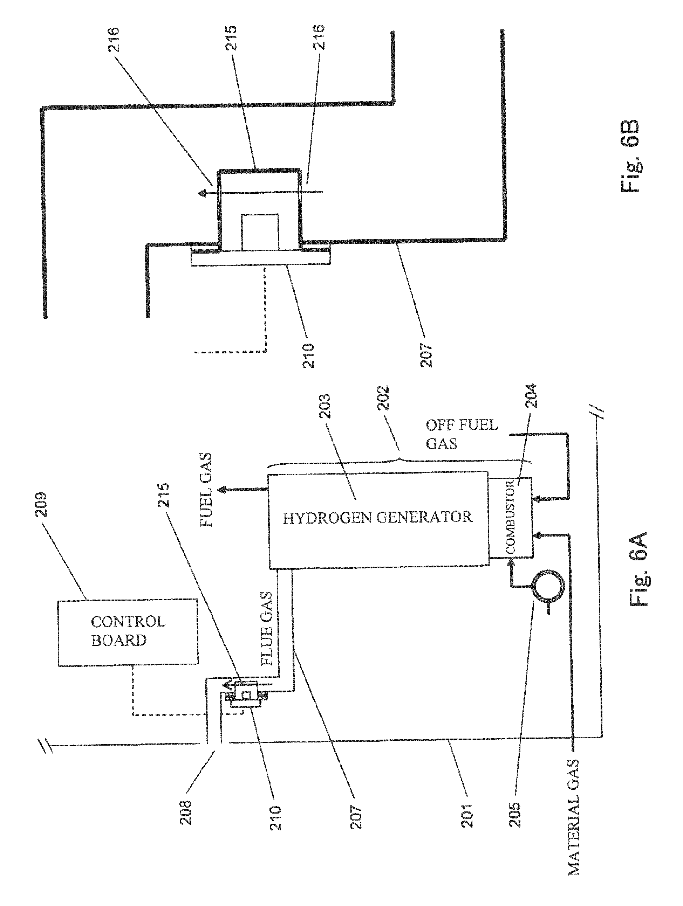

As shown in Fig. 6A, the air is supplied by a blower unit 205 to a combustor 204 in a casing 201. The material gas and the off fuel gas are supplied to the combustor 204. These gases are combusted in the combustion chamber 204, and the flue gas is discharged from a hydrogen generator 203. The flue gas flows through a flue gas passage 207 to be discharged to the outside through a flue gas outlet 208 formed on the casing 201. A CO sensor 210 is disposed on the flue gas passage 207 and detects the concentration of a CO gas contained in the flue gas. As shown in Fig. 6B, the CO sensor 210 is accommodated in a sensor cap on which a plurality of through holes 216 are formed (Conventional Example 2; see PTL 2, for example).

### Citation List

### Patent Literature

PTL 1: Japanese Laid-Open Patent Application Publication No. 11-141865
PTL 2: Japanese Laid-Open Patent Application Publication No. 2006-213567

### Summary of Invention

### Technical Problem

In Conventional Example 1, the flue gas cools down as it flows from the burner 104 toward the exhaust port 107. Therefore, the condensation of moisture contained in the flue gas may occur at the CO sensor 108 provided on the exhaust port 107 side. If the moisture adheres to the CO sensor 108, problems, such as the change in the output value of the CO sensor 108 and the breakdown of the CO sensor by, for example, wire disconnection, occur.

Especially, in the fuel cell system, moisture is supplied to the hydrogen generator in addition to a fuel gas and an oxidizing gas. With this, the flue gas from the hydrogen generator contains a large amount of moisture, so that the condensation of the moisture easily occurs, and water adhesion is a big problem.

In addition, in Conventional Examples 1 and 2, the contact burning-type CO sensor is used. The CO sensor combusts a combustible gas, such as carbon monoxide and hydrogen, to detect the concentration of the combustible gas. Therefore, there is a risk that if the concentration of the combustible gas is extremely high, the CO sensor breaks down. For example, in the fuel cell system, the fuel gas containing a large amount of hydrogen is used. If the combustion of the burner stops or purging is performed, the CO sensor is temporarily exposed to the fuel gas. The CO sensor reacts to the hydrogen gas, having higher reactivity than the CO gas, to break down.

The present invention was made to solve the above problems, and an object of the present invention is to provide a fuel cell system capable of surely detecting carbon monoxide around the fuel cell system to suppress the occurrence of a failure of the fuel cell system.

### Solution to Problem

A fuel cell system according to an embodiment of the present invention includes: a hydrogen generator configured to cause a reforming reaction of a material gas to generate a hydrogen-containing fuel gas; a fuel cell configured to cause a reaction between the fuel gas generated by the hydrogen generator and an oxygen-containing oxidizing gas to generate electric power; a combustor configured to combust at least one of the material gas and an off fuel gas discharged from the fuel cell; a casing configured to accommodate the hydrogen generator, the fuel cell, and the combustor; a flue gas passage through which a flue gas generated by the combustor is discharged; a first exhaust port, which is formed on the casing as a tip end opening of the flue gas passage and through which the flue gas from the combustor is discharged to an outside of the casing; a first intake port formed on the casing; a suction unit configured to suction air through the first intake port into the casing; and a CO detector provided at a place in the casing but other than the flue gas passage and configured to detect carbon monoxide contained in the air suctioned by the suction unit through the first intake port into the casing.

According to this configuration, the CO detector is provided at a place other than the flue gas passage. Therefore, the CO detector is not directly exposed to the flue gas. On this account, the CO detector is prevented from breaking down by, for example, the moisture and hydrogen contained in the flue gas.

Further, if the combustion gas or the like is combusted in a state where moisture has been supplied to the combustor, the flue gas contains a large amount of moisture. Even In this case, the condensed moisture flows through the flue gas passage to be discharged through the first exhaust port to the outside of the casing. Since the moisture is heavy, the moisture is not suctioned through the first intake port into the casing even by the suction unit. Therefore, a phenomenon in which the moisture adheres to the CO detector, and this breaks the CO detector does not occur.

Even if the fuel gas or the like is not combusted in the combustor, and the fuel gas is discharged from the combustor, the fuel gas flows through the flue gas passage to be discharged through the first exhaust port to the outside of the casing. With this, the concentration of the fuel gas is lowered by the air. In addition, hydrogen is extremely lighter than the air and easily diffuses. Therefore, the concentration of the hydrogen contained in the fuel gas is further low. On this account, since the concentration of the hydrogen suctioned through the first intake port is low, the CO detector is unlikely to react with the hydrogen. Thus, the CO detector can detect the CO concentration without breaking down.

Further, if the incomplete combustion occurs in the combustor since, for example, the entire fuel cell system is covered with a cover member, the concentration of the CO in the flue gas increases. In this case, the flue gas discharged through the flue gas passage and the first exhaust port is discharged to the outside of the casing. Then, the air around the casing is suctioned into the casing by the suction unit, and the concentration of the CO in the air is detected by the CO sensor. Thus, by detecting the carbon monoxide around the casing, the occurrence of the failure of the fuel cell system can be suppressed, and the safety of the fuel cell system can also be secured.

In the fuel cell system, the CO detector may be configured to detect the carbon monoxide contained in the air that has been suctioned through first intake port and has not flowed through the hydrogen generator, the fuel cell, and the combustor.

According to this configuration, there is a possibility that the air having flowed through the hydrogen generator, the fuel cell, and the combustor contains the fuel gas containing a large amount of hydrogen and the flue gas containing a large amount of moisture. However, since the CO detector is not exposed to such air, the CO detector is prevented from breaking down by the hydrogen or moisture.

The fuel cell system may further include: a control board provided in the casing and configured to convert DC power, generated by the fuel cell, into AC power; a separating wall configured to divide a space in the casing into a first space in which the suction unit, the control board, and the CO detector are provided and a second space in which the hydrogen generator, the fuel cell, and the combustor are provided; and a second exhaust port, which is formed on the casing and through which the air suctioned by the suction unit through the first intake port into the first space of the casing is discharged to the outside of the casing.

According to this configuration, the suction unit forcibly suctions the air outside the casing through the first intake port to supply the air to the first space. Therefore, the air around the casing is supplied to the CO detector in the first space, and the concentration of the CO can be surely, quickly detected by the CO detector. In addition, the control board in the first space is cooled down by the air suctioned by a first suction unit. With this, the inverter circuit of the control board is prevented from breaking down by heat, and the DC power generated by the fuel cell is surely converted into the AC power.

By the separating wall, the first space is isolated from the second space in which the hydrogen generator, the fuel cell, and the combustor are provided. Therefore, the heat from the hydrogen generator, the fuel cell, and the combustor is blocked by the separating wall. On this account, the control board and the like in the first space are prevented from being heated, so that the control board and the like are prevented from breaking down.

Further, the air suctioned through the first intake port into the casing is discharged through the second exhaust port to the outside of the casing. With this, the air in the casing does not stay therein, and the air outside the casing is smoothly suctioned into the casing. Therefore, the CO detector can precisely detect the concentration of the CO contained in the air outside the casing.

The fuel cell system may further include: a second intake port formed on the casing so as to communicate with the second space; and a communication portion formed on the separating wall so as to cause the first space and the second space to communicate with each other. Herein, when the first intake port is closed, the suction unit suctions the air, which has been taken through the second intake port into the second space, through the communication portion into the first space.

According to this configuration, the air outside the casing is supplied by the suction unit through the second intake port to the second space. This air may be utilized for the oxidation-reduction reaction in the fuel cell, the combustion in the combustor, and the like.

Even if the first intake port is closed, and the air is not suctioned through the first intake port, the air is supplied through the communication portion to the first space. This air is the air that has been around the casing and suctioned through the second intake port. Therefore, the CO detector in the first space can surely detect the concentration of the CO contained in the air around the casing.

In the fuel cell system, the separating wall may include an intake port cover attached inside the casing to prevent rain water from entering the casing through the first intake port. Herein, the communication portion is formed on the intake port cover.

According to this configuration, the intake port cover prevents the rain water from entering the casing through the first intake port. Therefore, the CO detector, the control board, and the like are prevented from breaking down by the rain water.

The fuel cell system may further include a control board configured to stop an operation of the fuel cell system when the CO detector detects the carbon monoxide.

According to this configuration, when the CO detector detects the carbon monoxide in the air around the casing, the operation of the fuel cell system is stopped. With this, the generation of the carbon monoxide is suppressed, and the occurrence of the failure of the fuel cell system can be suppressed.

In the fuel cell system, the CO detector includes a contact burning-type CO detector.

According to this configuration, since the air outside the casing is supplied to the CO detector, the CO detector is not exposed to, for example, the fuel gas containing high-concentration hydrogen. Therefore, used as the CO detector is a contact burning-type CO detector that has a high sensitivity for detecting carbon monoxide but may break down by, for example, the high-concentration hydrogen. With this, the CO detector is prevented from breaking down and surely detects the CO concentration.

### Advantageous Effects of Invention

The present invention has an effect of being able to provide a fuel cell system including the above-described configuration and capable of surely detecting carbon monoxide around the fuel cell system to suppress the occurrence of a failure of the fuel cell system.

The above object, other objects, features, and advantages of the present invention will be made clear by the following detailed explanation of preferred embodiments with reference to the attached drawings.

### Brief Description of Drawings

[Fig. 1] Fig. 1 is a diagram showing the configuration of a fuel cell system according to Embodiment 2 of the present invention.
[Fig. 2] Fig. 2 is a diagram showing the configuration of the fuel cell system according to Embodiment 3 of the present invention.
[Fig. 3] Fig. 3 is a diagram showing the configuration of the fuel cell system according to Embodiment 4 of the present invention.
[Fig. 4] Fig. 4 is a partial perspective view of the fuel cell system of Fig. 3.
[Fig. 5] Fig. 5 is a diagram showing the configuration of a conventional water heater.
[Figs. 6A and 6B] Fig. 6A is a diagram showing the configuration of a part of a conventional fuel cell system, and Fig. 6B is an enlarged view showing major portions of the fuel cell system of Fig. 6A.
[Fig. 7] Fig. 7 is a diagram showing the configuration of the fuel cell system according to Embodiment 1 of the present invention.
[Fig. 8] Fig. 8 is a diagram showing the configuration of the fuel cell system according to another embodiment of the present invention.

### Description of Embodiments

Hereinafter, embodiments of the present invention will be explained in reference to the drawings.

In the following explanation and drawings, the same reference signs are used for the same or corresponding components, and a repetition of the same explanation is avoided.

### Embodiment 1

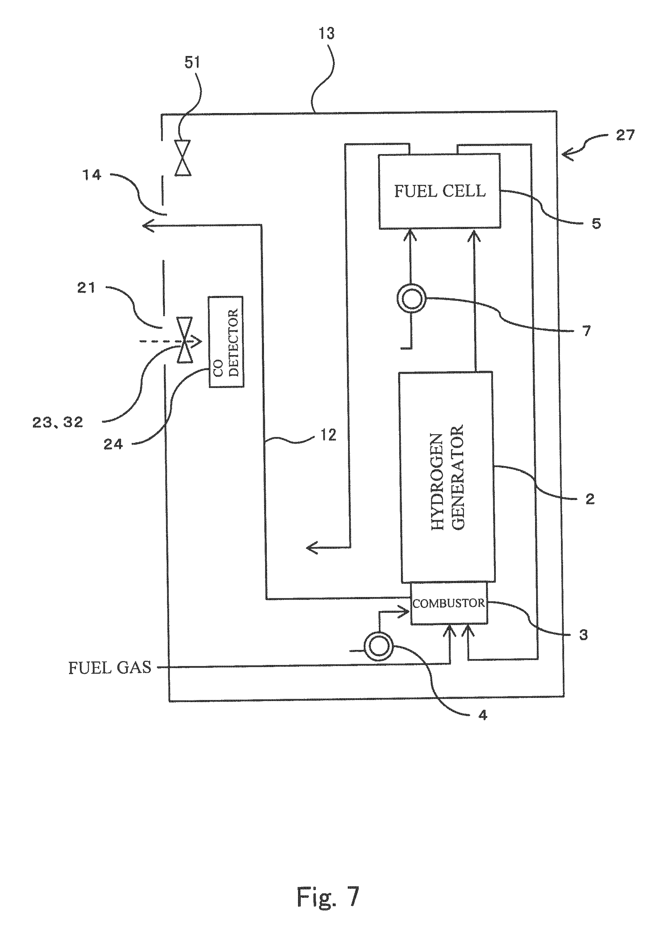

Fig. 7 is a diagram showing the configuration of a fuel cell system according to Embodiment 1.

A fuel cell system 27 includes: a hydrogen generator 2 configured to cause a reforming reaction of a material gas to generate a hydrogen-containing fuel gas; a fuel cell 5 configured to cause a reaction between the fuel gas generated by the hydrogen generator 2 and an oxygen-containing oxidizing gas to generate electric power; a combustor 3 configured to combust at least one of the material gas and an off fuel gas discharged from the fuel cell 5; a casing 13 configured to accommodate the hydrogen generator 2, the fuel cell 5, and the combustor 3; a flue gas passage 12 through which a flue gas generated by the combustor 3 is discharged; a first exhaust port 14, which is formed on the casing 13 as a tip end opening of the flue gas passage 12 and through which the flue gas from the combustor 3 is discharged to the outside of the casing 13; a first intake port 21 formed on the casing 13; suction units 4, 7, 23, 32, and 51 configured to suction air through the first intake port 21 into the casing 13; and a CO detector 24 provided at a place in the casing 13 but other than the flue gas passage 12 and configured to detect carbon monoxide contained in the air suctioned by the suction units 4, 7, 23, 32, and 51 through the first intake port 21 into the casing 13.

Used as the suction units are a combustion air pump 4, an air pump 7, a ventilation fan 23, an air supply unit 32, and a ventilation fan 51. In the casing 13, air is supplied by the combustion air pump 4 to the combustor 3. At this time, the air is suctioned through the first intake port 21 into the casing 13, so that the combustion air pump 4 serves as the suction unit. In addition, in the casing 13, the air is supplied as an oxidizing gas by the air pump 7 to a cathode electrode of the fuel cell 5. At this time, the air is suctioned through the first intake port 21 into the casing 13, so that the air pump 7 serves as the suction unit. Further, by the ventilation fans 23 and 51, the air inside the casing 13 is discharged from the casing 13, and the air outside the casing 13 is taken into the casing 13. At this time, the air is introduced through the first intake port 21 into the casing 13, so that the ventilation fans 23 and 51 serve as the suction units. Outside air is supplied to a first space 30 by the air supply unit 32. At this time, the air is suctioned through the first intake port 21 into the first space 30 of the casing 13, so that the air supply unit 32 serves as the suction unit.

According to this configuration, the CO detector 24 is provided at a place other than the flue gas passage 12. Therefore, the CO detector 24 is not directly exposed to the flue gas. On this account, the CO detector 24 is prevented from breaking down by a large amount of moisture and high-concentration hydrogen contained in the flue gas.

Further, the fuel cell 5, the hydrogen generator 2, and the combustor 3 are accommodated in the casing 13. The combustor 3 combusts the material gas or the off fuel gas to heat the hydrogen generator 2. The heated hydrogen generator 2 causes the reforming reaction of the material gas to generate the hydrogen-containing fuel gas. The fuel cell 5 causes the reaction between the fuel gas generated by the hydrogen generator 2 and the oxygen-containing oxidizing gas to generate the electric power. The flue gas from the combustor 3 is discharged through the first exhaust port 14 of the casing 13 to the outside of the casing 13. Then, the air around the casing 13 is suctioned through the first intake port 21 of the casing 13 into the casing 13 by the suction units 4, 7, 23, 32, and 51. The CO contained In this air is detected by the CO detector 24.

For example, if the combustion gas or the like is combusted in a state where moisture has been supplied to the combustor 3, the flue gas contains a large amount of moisture. Even In this case, the condensed moisture flows through the flue gas passage 12 to be discharged through the first exhaust port 14 to the outside of the casing 13. Since the moisture is heavy, the moisture is not suctioned through the first intake port 21 into the casing 13 even by the suction units 4, 7, 23, 32, and 51. Therefore, a phenomenon in which the moisture adheres to the CO detector 24, and this breaks the CO detector 24 does not occur.

Even if the fuel gas or the like is not combusted in the combustor 3, and the fuel gas is discharged from the combustor 3, the fuel gas flows through the flue gas passage 12 to be discharged through the first exhaust port 14 to the outside of the casing 13. With this, the concentration of the fuel gas is lowered by the air. In addition, hydrogen is extremely lighter than the air and easily diffuses. Therefore, the concentration of the hydrogen contained in the fuel gas is further low. On this account, since the concentration of the hydrogen suctioned through the first intake port 21 is low, the CO detector 24 is unlikely to react with the hydrogen. Thus, the CO detector 24 can detect the CO concentration without breaking down.

Further, if the incomplete combustion occurs in the combustor 3 since, for example, the entire fuel cell system 27 is covered with a cover member, the concentration of the CO in the flue gas increases. In this case, the flue gas discharged through the first exhaust port 14 is discharged to the outside of the casing 13. Then, the air around the casing 13 is suctioned into the casing 13 by the suction units 4, 7, 23, 32, and 51, and the concentration of the CO in the air is detected by the CO sensor. Thus, the CO around the casing 13 can be detected, so that the safety can be improved.

### Embodiment 2

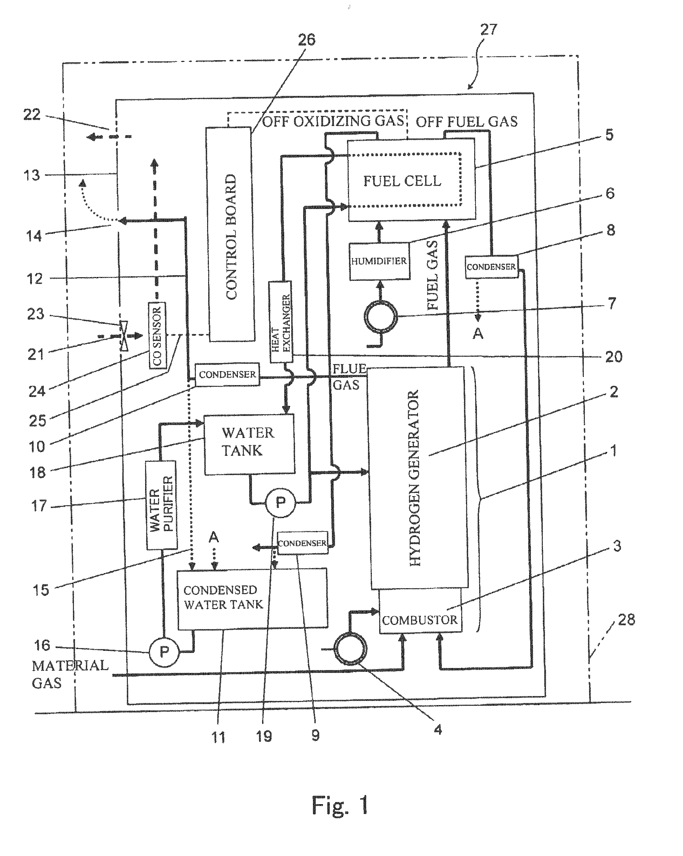

Fig. 1 shows the configuration of the fuel cell system 27 according to Embodiment 2 of the present invention. Embodiment 2 shows an example in which the fuel cell system of Embodiment 1 is applied to the fuel cell system including a water recovery system and the like.

A reformer 1 includes the hydrogen generator 2 and the combustor 3.

The hydrogen generator 2 reforms the material gas into the hydrogen-rich fuel gas in the present of a catalyst or the like. Examples of the material gas includes: a hydrocarbon-based gas, such as a natural gas; the other hydrocarbon-based gas, such as a propane gas; a hydrocarbon-based fuel, such as kerosene, which is liquid at normal temperature; and an organic-based fuel, such as methanol, other than the hydrocarbon-based fuel.

A gas (flue gas) generated by the combustion in the combustor 3 is supplied through the hydrogen generator 2 to a condenser 10. The condenser 10 recovers heat from the flue gas and separates water, condensed by the heat recovery, from the flue gas. After the heat and the condensed water are recovered, the flue gas flows through the flue gas passage 12 to be discharged through the first exhaust port 14, formed on the casing 13, to the outside of the casing 13. The condensed water separated from the condenser 10 flows through a condensed water passage 15 to be recovered in a condensed water tank 11.

The combustor 3 combusts the material gas or the off fuel gas to heat the hydrogen generator 2 up to an appropriate temperature. The combustion air pump 4 supplies the air in the casing 13 to the combustor 3 such that the combustion in the combustor 3 becomes an optimal state.

The fuel cell 5 includes an anode electrode and the cathode electrode and generates the electric power by an oxidation-reduction reaction caused in these electrodes. The hydrogen-rich fuel gas reformed by the reformer 1 is supplied to the anode electrode. Regarding the fuel gas, an off fuel gas unused in the oxidation-reduction reaction is discharged from the anode electrode to a condenser 8. The air is supplied as an oxygen-containing oxidizing gas to the cathode electrode. At this time, the air pump 7 supplies the air in the casing 13 to a humidifier 6. The humidifier 6 humidifies the air from the air pump 7 such that the dew point of the air becomes appropriate. Then, the humidifier 6 supplies the humidified air to the cathode electrode. Regarding the oxidizing gas supplied to the cathode electrode, an off oxidizing gas unused in the oxidation-reduction reaction is discharged from the cathode electrode to a condenser 9.

The condenser 8 recovers heat from the off fuel gas discharged from the anode electrode of the fuel cell 5 and separates water, condensed by the heat recovery, from the off fuel gas. After the heat and the condensed water are recovered, the off fuel gas is supplied to the combustor 3.

The condenser 9 recovers heat from the off oxidizing gas discharged from the cathode electrode of the fuel cell 5 and separates water, condensed by the heat recovery, from the off oxidizing gas. After the heat and the condensed water are recovered, the off oxidizing gas is discharged to the outside of the fuel cell system 27.

The condensed water tank 11 collects the condensed water in the condensers 8, 9, and 10. The water recovered in the condensed water tank 11 is supplied to a water purifier 17 by a water supply pump 16 and purified by the water purifier 17. The purified water is stored in a water tank 18. The water in the water tank 18 is supplied as cooling water to the fuel cell 5 by a cooling water supply pump 19. The cooling water recovers heat generated when the fuel cell 5 generates the electric power. This heat is recovered by a heat exchanger 20 and stored as, for example, hot water stored in an external hot water tank (not shown). In addition, the heat recovered from the condensers 8, 9, and 10 is also stored as the hot water stored in the external hot water tank.

The casing 13 accommodates the components of the fuel cell system 27 configured as above. The first exhaust port 14, the first intake port 21, and a second exhaust port 22 are formed on the casing 13.

The first exhaust port 14 is connected to the combustor 3 through the flue gas passage 12. The flue gas passage 12 is formed so as to extend through the hydrogen generator 2 such that the flue gas heats the hydrogen generator 2. The flue gas having been generated by the combustor 3 and flowed through the hydrogen generator 2 is discharged through the first exhaust port 14 to the outside of the casing 13.

The first intake port 21 is formed in the vicinity of and under the first exhaust port 14. The ventilation fan 23 is provided inside the casing 13 and in the vicinity of the first intake port 21.

The ventilation fan 23 rotates in such a direction that the air outside the casing 13 is introduced into the casing 13 through the first intake port 21. The air introduced by the ventilation fan 23 is supplied to the CO sensor 24 and the inside of the casing 13.

The second exhaust port 22 is formed above the first exhaust port 14. The air supplied to the CO sensor 24 through the first intake port 21 and the air spreading in the casing 13 are discharged through the second exhaust port 22 to the outside of the casing 13.

Used as the CO sensor (CO detector) 24 is a contact burning-type CO sensor. The contact burning-type CO sensor oxidizes with a reducing gas, such as the hydrogen gas or the CO gas, on the surface of a detector element thereof to detect the concentration of the reducing gas. The contact burning-type CO sensor excels in heat resistance, humidity resistance, responsiveness, and the like and is suitable as a CO sensor used in the fuel cell system 27.

The CO sensor 24 is provided in a region from the first intake port 21 to the second exhaust port 22, inside the casing 13, and in the vicinity of the first intake port 21. Therefore, the air outside the casing 13 and introduced through the first intake port 21 is supplied to the CO sensor 24. The CO sensor 24 measures the CO concentration in the casing 13 to detect the CO. Therefore, the CO sensor 24 detects the CO contained in the air that has been suctioned through the first intake port 21 and has not flowed through the hydrogen generator 2, the fuel cell 5, and the combustor 3. The CO sensor 24 is connected to a control board 26 through a CO sensor harness 25. When the CO sensor 24 detects the CO, it outputs a detection signal to the control board 26.

The control board 26 includes a controller (not shown). When the CO sensor 24 detects the CO, the controller stops the operation of the fuel cell system 27. The control board 26 further includes an inverter circuit (not shown) configured to convert DC power, generated by the fuel cell 5, into AC power. By using the inverter circuit, the controller controls the electric power output from the fuel cell 5.

The operations and actions of the fuel cell system 27 configured as above will be explained below.

In the fuel cell system 27, the material gas is supplied to the combustor 3 to be combusted in the combustor 3. With this, the hydrogen generator 2 is heated. When the temperature of the hydrogen generator 2 reaches a temperature necessary for the reforming of the material gas, the material gas is also supplied to the hydrogen generator 2. In addition, the cooling water supply pump 19 is driven, so that the water in the water tank 18 is supplied to the hydrogen generator 2 as the moisture necessary for the reforming reaction. Then, the hydrogen generator 2 reforms the material gas to generate the hydrogen-rich fuel gas.

The fuel gas is supplied from the hydrogen generator 2 to the fuel cell 5. In addition, the air humidified by the humidifier 6 is supplied as the oxidizing gas to the fuel cell 5 by the air pump 7. The oxidation-reduction reaction between the fuel gas and the air occurs, and thus, the electric power is generated. The fuel gas contains residual combustible components unused in the oxidation-reduction reaction and the reforming reaction and is discharged as the off fuel gas from the fuel cell 5 to the condenser 8. The condenser 8 recovers heat from the off fuel gas and separates the condensed water from the off fuel gas. Then, the off fuel gas is supplied to the combustor 3. In the combustor 3, the off fuel gas is combusted as a hydrogen combustion gas. Thus, the temperature of the hydrogen generator 2 is maintained. When the material gas and the off fuel gas are combusted in the combustor 3, the flue gas is generated. The fuel flue gas flows through the flue gas passage 12, and the condenser 10 recovers heat from the fuel flue gas and separates the condensed water from the fuel flue gas. Then, the fuel flue gas is discharged through the first exhaust port 14 to the outside of the casing 13.

Under a proper operation circumstance of the fuel cell system 27 in which the casing 13 is not covered with a cover 28, the flue gas contains a large amount of carbon dioxide and contains almost no combustible gas, such as hydrogen. Therefore, the CO sensor 24 detects almost no combustible gas and can appropriately detect the CO contained in the air introduced through the first intake port 21. Since the flue gas contains the moisture, and the moisture is heavy, the moisture is unlikely to be suctioned by the ventilation fan 23 through the first intake port 21 into the casing 13. Therefore, the moisture does not adhere to the CO sensor 24. On this account, the CO sensor 24 can surely detect the CO without breaking down or malfunctioning.

If the combustion in the combustor 3 stops, or the purging is performed, the fuel gas containing the high-concentration hydrogen is temporarily contained in the flue gas. Even In this case, the flue gas is high in temperature, and the hydrogen contained in the flue gas is lighter than the air. Therefore, the hydrogen flows through the first exhaust port 14 to move upward and then diffuses in the air. On this account, the hydrogen is unlikely to be introduced through the first intake port 21 located under the first exhaust port 14. Thus, the CO sensor 24 easily detects the hydrogen gas having a higher reducibility than the CO gas, so that there is a possibility that the CO sensor 24 malfunctions or breaks down. It should be noted that the CO sensor 24 provided in the vicinity of the first intake port 21 is not exposed to the high-concentration hydrogen. With this, the CO sensor 24 is prevented from breaking down and can appropriately detect the CO contained in the air from the first intake port 21.

The casing 13 of the fuel cell system 27 may be covered with a cover member, such as the motorcycle cover 28 (shown by a chain double-dashed line in Fig. 1). In this case, the casing 13 becomes a completely sealed state, so that fresh air is not supplied to the inside of the cover 28. Under such an improper operation circumstance, the fuel cell system 27 is operated. In this case, the flue gas discharged through the first exhaust port 14 stays inside the cover 28. The air containing the flue gas inside the cover 28 is supplied through the first intake port 21 to the combustor 3 to be utilized as the combustion air. The oxygen in the combustion air is consumed by the combustion, and the flue gas is discharged. Therefore, the concentration of the oxygen in the combustion air gradually decreases, and the combustion state in the combustor 3 deteriorates. Thus, the concentration of the CO in the flue gas increases. In accordance with this, the concentration of the CO in the air inside the cover 28 also increases. However, the concentration of the CO in the air outside the casing 13, that is, the air inside the cover 28 is detected by the CO sensor 24. The detected CO concentration is output from the CO sensor 24 to the control board 26. Thus, the control board 26 stops the operation of the fuel cell system 27, and a warning sound is emitted. By this safety net, the safety of the fuel cell system 27 can be further improved while preventing the fuel cell system 27 from breaking down. Further, a user is informed that the operation of the fuel cell system 27 is inappropriate, and the cover 28 is removed.

As above, by detaching the cover 28 from the casing 13, the fuel cell system 27 can be operated under a proper operation circumstance. Therefore, the flue gas widely diffuses in the atmosphere and is unlikely to be supplied to the combustor 3. On this account, the combustor 3 does not run short of oxygen, and the concentration of the CO in the flue gas does not increase. Thus, the CO concentration detected by the CO sensor 24 does not increase. Therefore, whether or not the casing 13 is covered with the cover 28 in a sealed state is detected by monitoring the CO concentration detected by the CO sensor 24.

The flue gas discharged through the first exhaust port 14 is higher in temperature than the outside air, so that the flue gas diffuses upward from the first exhaust port 14. As a result, even in a case where the casing 13 is covered with the cover 28, the flue gas is not directly introduced to the first intake port 21 located under the first exhaust port 14. Therefore, it is possible to prevent a phenomenon in which the fuel flue gas flows through the first intake port 21 to reach the CO sensor 24 without being diluted. As above, the CO sensor 24 is not exposed to the flue gas having a higher CO concentration or a higher hydrogen concentration than the air inside the cover 28. Therefore, a misdetection that leads to an early gas shutoff that is so-called "early shutoff' and breakdown of the CO sensor 24 by the exposure to the hydrogen can be prevented.

### Embodiment 3

A fuel cell system 27A of Embodiment 3 is substantially the same as the fuel cell system 27 of Embodiment 2. However, the fuel cell system 27A of Embodiment 3 further includes a separating wall 29, a second intake port 33, and a third exhaust port 49. In addition, instead of the ventilation fan 23 of the fuel cell system 27, the air supply unit 32 is provided as the suction unit.

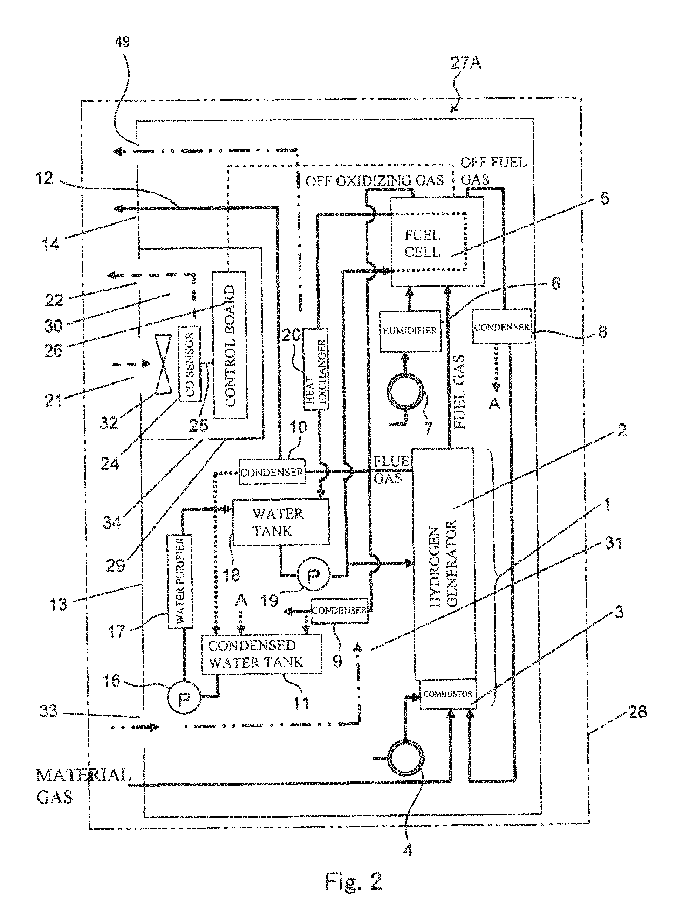

Fig. 2 is a configuration diagram of the fuel cell system 27A according to Embodiment 3.

The separating wall 29 is provided inside the casing 13 and divides an internal space of the casing 13 into the first space 30 and a second space 31. The air supply unit 32, the control board 26, and the CO sensor 24 are provided in the first space 30. The hydrogen generator 2, the fuel cell 5, and the combustor 3 are provided in the second space 31. The separating wall 29 is provided with a communication portion 34.

The communication portion 34 penetrates through the separating wall 29 to connect the first space 30 and the second space 31. Through the communication portion 34, the air can move between the first space 30 and the second space 31.

The second intake port 33 is formed under the first intake port 21 of the casing 13 so as to communicate with the second space 31. The air is supplied through the second intake port 33 to the second space 31. Since the air is supplied through the second intake port 33 to the large second space 31, the second intake port 33 may be larger than the first intake port 21, or a plurality of second intake ports 33 may be formed. With this, all the second intake ports 33 do not become clogged states at the same time.

The third exhaust port 49 is formed above the first exhaust port 14 of the casing 13. The air having been suctioned through the second intake port 33 and flowed through the second space 31 is discharged through the third exhaust port 49 to the outside of the casing 13.

The air supply unit 32 is provided inside the first space 30 and in the vicinity of the first intake port 21. The air supply unit 32 serves as the suction unit and supplies the air, suctioned through the first intake port 21, to the first space 30. The air suctioned by the air supply unit 32 through the first intake port 21 into the first space 30 flows through the first space 30 to be discharged through the second exhaust port 22.

The operations and actions of the fuel cell system 27A configured as above will be explained below.

When the fuel cell system 27 starts up, the pumps 4 and 7 are activated, so that the air is suctioned through the second intake port 33 into the second space 31.

The air taken into the second space 31 is introduced into the combustor 3 and the fuel cell 5. The combustor 3 combusts the material gas to heat the hydrogen generator 2. The oxidation-reduction reaction between the fuel gas from the hydrogen generator 2 and the air occurs in the fuel cell 5, and thus, the fuel cell 5 generates the electric power.

Further, the air taken into the second space 31 cools down the hydrogen generator 2, the fuel cell 5, the combustor 3, and the like.

Then, the air utilized to cool down the respective portions in the second space 31 is discharged through the third exhaust port 49 to the outside of the casing 13.

The flue gas discharged through the hydrogen generator 2 is discharged through the first exhaust port 14 to the outside of the casing 13.

The air supply unit 32 is activated, so that the air outside the casing 13 is suctioned through the first intake port 21 into the first space 30. This air is supplied to the CO sensor 24, and the CO sensor 24 measures the concentration of the CO contained in the air outside the casing 13. This air is also supplied to the control board 26 in the first space 30 to suppress an excessive temperature increase of the inverter circuit of the control board 26. The air having flowed through the first space 30 is discharged through the second intake port 33 to the outside of the casing 13.

Normally, the air is not supplied to the first space 30 through the ports other than the first intake port 21. However, if the first intake port 21 is clogged by the cover 28, dusts, or the like, the first space 30 becomes a negative pressure state. In this case, the air that has been outside the casing 13 and taken into the second space 31 through the second intake port 33 is supplied by the air supply unit 32 through the communication portion 34 to the first space 30. It should be noted that all the second intake ports 33 are configured so as not to become the clogged states at the same time. Therefore, the air is supplied to the second space 31 at all times, and the air is also supplied to the first space 30 through the communication portion 34.

As above, the air outside the casing 13 is supplied by the air supply unit 32 through the first intake port 21 or the communication portion 34 to the CO sensor 24 in the first space 30. Therefore, even if the first intake port 21 is clogged by the cover 28 or the like, the CO contained in the air inside the cover 28 is surely detected by the CO sensor 24. On this account, when the CO sensor 24 detects the CO, the control board 26 stops the fuel cell system 27A, and the warning sound is emitted. Thus, the safety of the fuel cell system 27A can be improved while preventing the fuel cell system 27A from breaking down. Further, a user is informed that the operation of the fuel cell system 27A is inappropriate, and the cover 28 is removed. With this, the fuel cell system 27A can normally operate without causing the shortage of the oxygen.

Since the first intake port 21 is formed under the first exhaust port 14, the misdetection by the "early shutoff" and the breakdown of the CO sensor 24 by the exposure to hydrogen can be prevented.

Further, the first space 30 is separated from the second space 31 by the separating wall 29, and the air supply unit 32 is provided inside the first space 30 and in the vicinity of the first intake port 21. Therefore, the outside air taken through the first intake port 21 can be surely supplied to the CO sensor 24 and cool down the control board 26.

The heat and air in the second space 31 are not directly supplied to the first space 30 by the separating wall 29. Therefore, the control board 26 and the like are prevented from becoming high in temperature. A gas, such as steam or high-concentration hydrogen, which becomes a cause of the breakdown of the CO sensor 24 may be temporarily, locally generated in the second space 31. Even In this case, the gas that becomes the cause of the breakdown is once discharged from the second space 31 to the outside of the casing 13 to diffuse, and then, is introduced into the first space 30 to be detected by the CO sensor 24. Therefore, the CO sensor 24 is not directly exposed to the steam, the high-concentration hydrogen, or the like, so that the CO sensor 24 can be prevented from breaking down. Further, the CO sensor 24 measures the CO in the air supplied through the first intake port 21. Therefore, the CO sensor 24 can surely detect the CO in a case where, for example, the high-concentration carbon monoxide is being continuously discharged to the outside of the casing 13.

### Embodiment 4

A fuel cell system 27B of Embodiment 4 is substantially the same as the fuel cell system 27A of Embodiment 3. However, in the fuel cell system 27A of Embodiment 4, the separating wall 29 includes an intake port cover 40. In addition, the first intake port 21 herein is different in position from the first intake port 21 of Embodiment 3.

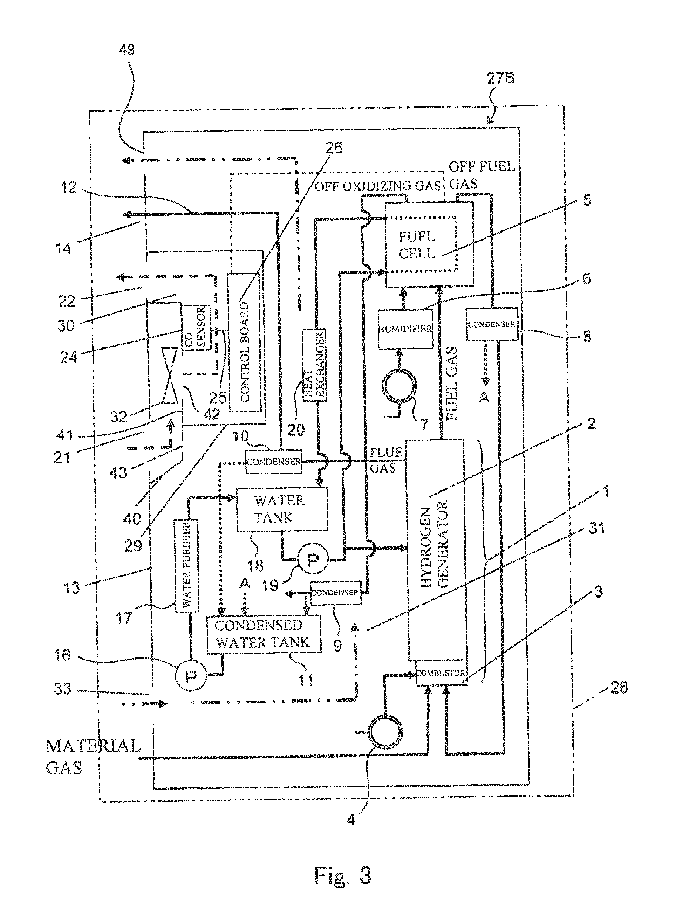

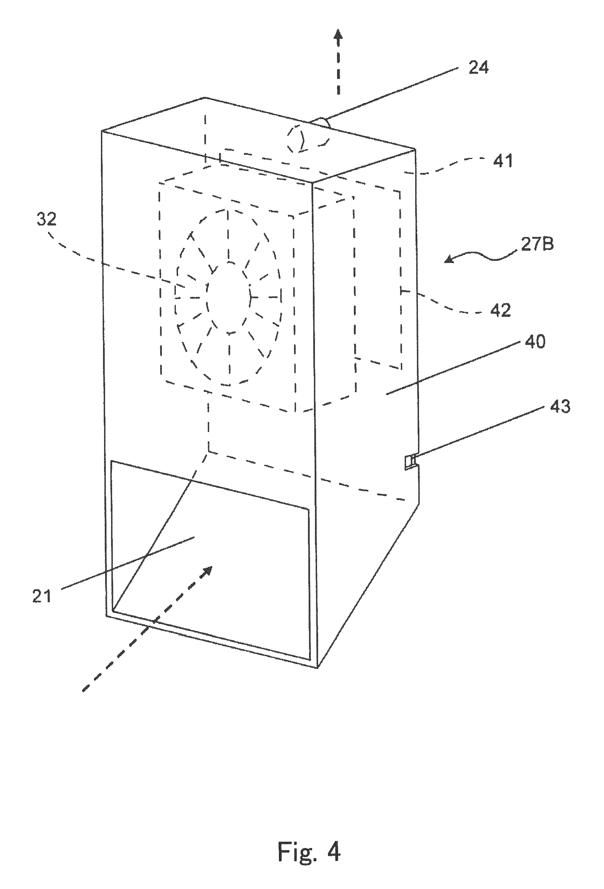

Fig. 3 shows the configuration of the fuel cell system 27B according to Embodiment 4 of the present invention. Fig. 4 is a partial perspective view of the fuel cell system 27B.

The separating wall 29 includes the intake port cover 40 having a box shape, and the intake port cover 40 is attached inside the first space 30 of the casing 13 so as to be spaced apart from and surround the first intake port 21. The intake port cover 40 prevents rain water from entering through the first intake port 21 into the casing 13. The air supply unit 32 is accommodated in the intake port cover 40. An opening 42 and a communication portion 43 are formed on the intake port cover 40. The opening 42 is formed on a back plate 41 of the intake port cover 40. The CO sensor 24 is provided outside the back plate 41 of the intake port cover 40 and above the opening 42. The air introduced by the air supply unit 32 through the first intake port 21 to the intake port cover 40 is supplied upward through the opening 42 toward the CO sensor 24.

In each of the fuel cell systems 27 and 27A, the first intake port 21 is provided at the same height as the CO sensor 24. However, in the fuel cell system 27B, the first intake port 21 is provided under the CO sensor 24 by a predetermined distance.

The operations and actions of the fuel cell system 27B configured as above are the same as those of the fuel cell system 27A.

When the first intake port 21 is closed, the air that has been outside the casing 13 and taken into the second space 31 through the second intake port 33 is introduced through the communication portion 43 to the intake port cover 40 to be supplied through the opening 42 to the CO sensor 24. At this time, the CO sensor 24 is not adversely affected by, for example, the ingress of water through the first intake port 21.

As above, the air outside the casing 13 is supplied by the air supply unit 32 through the first intake port 21 or the communication portion 43 to the CO sensor 24. Therefore, even if the first intake port 21 is clogged by the cover 28 or the like, the CO contained in the air that has been outside the casing 13 and is inside the cover 28 is surely detected by the CO sensor 24. On this account, when the CO sensor 24 detects the CO, the control board 26 stops the fuel cell system 27B, and the warning sound is emitted. Thus, the safety of the fuel cell system 27B can be improved while preventing the fuel cell system 27B from breaking down. Further, a user is informed that the operation of the fuel cell system 27B is inappropriate, and the cover 28 is removed. With this, the fuel cell system 27B can normally operate.

The first intake port 21 is surrounded by the intake port cover 40 including the opening 42. With this, while preventing the water and the like from entering through the first intake port 21 into the casing 13, the air through the first intake port 21 can be supplied through the opening 42 to the CO sensor 24.

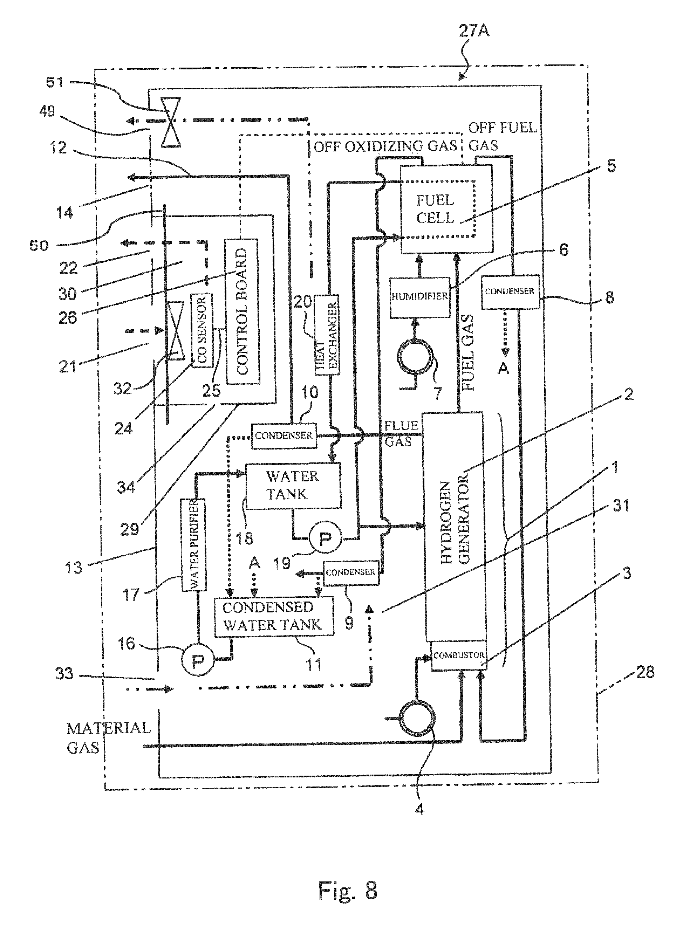

In Embodiment 2, the ventilation fan 23 is used as the suction unit, and in Embodiments 3 and 4, the air supply unit 32 is used as the suction unit. The suction unit is not limited to the ventilation fan 23 or the air supply unit 32 as long as it can introduce the air outside the casing 13 into the casing 13. For example, as shown in Fig. 8, the ventilation fan 51 configured to rotate in such a direction that the air inside the casing 13 is discharged to the outside of the casing 13 may be provided as the suction unit in the vicinity of the third exhaust port 49. In Embodiment 2, the ventilation fan 51 may be provided as the suction unit in the vicinity of the second exhaust port 22. Further, the ventilation fans may be respectively provided as the suction units at the first intake port 21, and the second and third exhaust ports 22 and 49. Even In this case, the same effects can be obtained.

Further, in the above embodiments, the ventilation fan 23 and the air supply unit 32 are used as the suction units. However, the ventilation fan 23 and the air supply unit 32 may not be provided in the casing 13. In this case, the combustion air pump 4 and the air pump 7 may be used as the suction units. These pumps 4 and 7 supply the air in the casing 13 to the humidifier 6 or the combustor 3. With this, even in a case where the ventilation fans are not provided at the first intake port 21 and the second and third exhaust ports 22 and 49, the air outside the casing 13 flows through the opening portions, such as the first intake port 21 and the second exhaust port 22, into the casing 13. Therefore, even in a case where the casing 13 is covered with the cover 28, the CO-containing air in the cover 28 diffuses through the opening portion into the casing 13. The CO sensor 24 detects the concentration of the CO contained in the air introduced into the casing 13. In this case, the CO sensor can more precisely detect the CO concentration outside the casing 13 by providing the CO sensor 24 as close to the opening portion, such as the first intake port 21 or the second or third exhaust port 22 or 49, as possible.

In the above embodiments, the CO sensor 24 is provided in the vicinity of the first intake port 21. However, the CO sensor 24 may be provided in the vicinity of the second intake port 33.

Further, in the above embodiments, the contact burning-type CO sensor is used as the CO sensor. However, the CO sensor is not limited to this as long as it can detect the CO. For example, a semiconductor CO sensor may be used as the CO sensor. The semiconductor CO sensor oxidizes with a reducing gas on the surface of a detector element thereof to detect the CO concentration. A method of detecting the CO concentration by the semiconductor CO sensor is basically the same as the method by the contact burning-type CO sensor. Therefore, by providing the semiconductor CO sensor in the vicinity of the first intake port 21, the semiconductor CO sensor detects the CO concentration while preventing the misdetection and breakdown.

In the above embodiments, the first intake port 21 is provided under the first exhaust port 14. However, the arrangement of the first intake port 21 and the first exhaust port 14 is not limited to this. For example, the first intake port 21 may be provided on a side of or above the first exhaust port 14. In this case, to prevent the flue gas from being directly suctioned to the first intake port 21, the first intake port 21 and the first exhaust port 14 may be adequately separated from each other, or the direction of the discharging of the flue gas through the first exhaust port 14 may be changed by an auxiliary part. Thus, the same effects can be obtained.

Further, in Embodiment 4, the intake port cover 40 having a box shape is attached inside the first space 30 so as to be spaced apart from and surround the first intake port 21. However, the intake port cover 40 is not limited to this as long as it has such a shape that prevents rain water from entering through the first intake port 21 into the casing 13. For example, as shown in Fig. 8, an intake port cover 50 having a plate shape may be attached inside the first space 30. In this case, the intake port cover 50 is provided so as to be spaced apart from the first intake port 21 and in parallel with a surface, on which the first intake port 21 is formed, of the casing 13.

In Embodiments 2 to 4, the flue gas passage 12 connected to the combustor 3 is provided so as to extend through the hydrogen generator 2. However, as shown in Fig. 7, the flue gas passage 12 may be connected to the combustor 3 and the first exhaust port 14 without extending through the hydrogen generator 2.

Further, in the above embodiments, the hydrogen generator 2 is heated by the combustor 3. However, an autothermal hydrogen generator may be used. In this case, the combustor 2 is not used, and the hydrogen generator includes a pump. This pump is used as the suction unit configured to suction the air through the first intake port 21 into the casing 13. In addition, in the autothermal hydrogen generator, the heat generated by the CO oxidation reaction is utilized in the reforming reaction. At this time, the CO decreases, so that the breakdown of devices by the CO is suppressed.

In the above embodiments, the CO sensor 24 configured to detect the CO in the air that has been outside the casing 13 and suctioned through the first intake port 21 is used in each of the fuel cell systems 27, 27A, and 27B. As with the above, the CO sensor 24 is applicable to products, such as gas water heaters, gas heaters, and gas stoves, each of which includes a combustion system and uses a combustible gas.

The foregoing explanation should be interpreted only as an example and is provided for the purpose of teaching the best mode for carrying out the present invention to one skilled in the art. The structures and/or functional details may be substantially modified within the spirit of the present invention.

### Industrial Applicability

The fuel cell system of the present invention is useful as, for example, a fuel cell system capable of surely detecting carbon monoxide around the fuel cell system to suppress the occurrence of a failure of the fuel cell system.

### Reference Signs List

- 2: hydrogen generator
- 3: combustor
- 4: combustion air pump (suction unit)
- 5: fuel cell
- 7: air pump (suction unit)
- 12: flue gas passage
- 13: casing
- 14: first exhaust port
- 21: first intake port
- 22: second exhaust port
- 23: ventilation fan (suction unit)
- 24: CO sensor (CO detecting portion)
- 27: fuel cell system
- 27A: fuel cell system
- 27B: fuel cell system
- 26: control board
- 29: separating wall
- 30: first space
- 31: second space
- 32: air supply unit (suction unit)
- 33: second intake port
- 34: communication portion
- 40: intake port cover
- 43: communication portion
- 50: intake port cover
- 51: ventilation fan (suction unit)

## Claims

1. A fuel cell system comprising:
a hydrogen generator configured to cause a reforming reaction of a material gas to generate a hydrogen-containing fuel gas;
a fuel cell configured to cause a reaction between the fuel gas generated by the hydrogen generator and an oxygen-containing oxidizing gas to generate electric power;
a combustor configured to combust at least one of the material gas and an off fuel gas discharged from the fuel cell;
a casing configured to accommodate the hydrogen generator, the fuel cell, and the combustor;
a flue gas passage through which a flue gas generated by the combustor is discharged;
a first exhaust port, which is formed on the casing as a tip end opening of the flue gas passage and through which the flue gas from the combustor is discharged to an outside of the casing;
a first intake port formed on the casing;
a suction unit configured to suction air through the first intake port into the casing; and
a CO detector provided at a place in the casing but other than the flue gas passage and configured to detect carbon monoxide contained in the air suctioned by the suction unit through the first intake port into the casing.

2. The fuel cell system according to claim 1, wherein the CO detector is configured to detect the carbon monoxide contained in the air that has been suctioned through first intake port and has not flowed through the hydrogen generator, the fuel cell, and the combustor.

3. The fuel cell system according to claim 1 or 2, further comprising:
a control board provided in the casing and including an inverter circuit configured to convert DC power, generated by the fuel cell, into AC power;
a separating wall configured to divide a space in the casing into a first space in which the suction unit, the control board, and the CO detector are provided and a second space in which the hydrogen generator, the fuel cell, and the combustor are provided; and
a second exhaust port, which is formed on the casing and through which the air suctioned by the suction unit through the first intake port into the first space of the casing is discharged to the outside of the casing.

4. The fuel cell system according to claim 3, further comprising:
a second intake port formed on the casing so as to communicate with the second space;
a communication portion formed on the separating wall so as to cause the first space and the second space to communicate with each other, wherein
when the first intake port is closed, the suction unit suctions the air, which has been taken through the second intake port into the second space, through the communication portion into the first space.

5. The fuel cell system according to claim 4, wherein:
the separating wall includes an intake port cover attached inside the casing to prevent rain water from entering the casing through the first intake port; and
the communication portion is formed on the intake port cover.

6. The fuel cell system according to any one of claims 1 to 5, further comprising a control board configured to stop an operation of the fuel cell system when the CO detector detects the carbon monoxide.

7. The fuel cell system according to any one of claims 1 to 6, wherein the CO detector includes a contact burning-type CO detector.

## Amended claims

### Amended claims under Art. 19.1 PCT

**1.** (currently amended) A fuel cell system comprising:
a hydrogen generator configured to cause a reforming reaction of a material gas to generate a hydrogen-containing fuel gas;
a fuel cell configured to cause a reaction between the fuel gas generated by the hydrogen generator and an oxygen-containing oxidizing gas to generate electric power;
a combustor configured to combust at least one of the material gas and an off fuel gas discharged from the fuel cell;
a casing configured to accommodate the hydrogen generator, the fuel cell, and the combustor,
a flue gas passage through which a flue gas generated by the combustor is discharged;
a first exhaust port, which is formed on the casing as a tip end opening of the flue gas passage and through which the flue gas from the combustor is discharged to an outside of the casing;
a first intake port formed on the casing;
a suction unit configured to suction air through the first intake port into the casing; and
a CO detector provided at a place in the casing but other than the flue gas passage and configured to detect carbon monoxide contained in the air suctioned by the suction unit through the first intake port into the casing, wherein
air is directly sent to the CO detector through the first intake port.

**2.** The fuel cell system according to claim 1, wherein the CO detector is configured to detect the carbon monoxide contained in the air that has been suctioned through first intake port and has not flowed through the hydrogen generator, the fuel cell, and the combustor.

**3.** The fuel cell system according to claim 1 or 2, further comprising:
a control board provided in the casing and including an inverter circuit configured to convert DC power, generated by the fuel cell, into AC power;
a separating wall configured to divide a space in the casing into a first space in which the suction unit, the control board, and the CO detector are provided and a second space in which the hydrogen generator, the fuel cell, and the combustor are provided; and
a second exhaust port, which is formed on the casing and through which the air suctioned by the suction unit through the first intake port into the first space of the casing is discharged to the outside of the casing.

**4.** The fuel cell system according to claim 3, further comprising:
a second intake port formed on the casing so as to communicate with the second space;
a communication portion formed on the separating wall so as to cause the first space and the second space to communicate with each other, wherein
when the first intake port is closed, the suction unit suctions the air, which has been taken through the second intake port into the second space, through the communication portion into the first space.

**5.** (currently amended) The fuel cell system according to claim 4, wherein:
the separating wall is attached inside the casing and provided with an intake port cover for preventing rain water from entering the casing through the first intake port; and
the communication portion is formed on the intake port cover.

**6.** The fuel cell system according to any one of claims 1 to 5, further comprising a control board configured to stop an operation of the fuel cell system when the CO detector detects the carbon monoxide.

**7.** The fuel cell system according to any one of claims 1 to 6, wherein the CO detector includes a contact burning-type CO detector.
